# EUROPÄISCHE PATENTSCHRIFT

(11) **EP 2 902 375 B1**
(45) Veröffentlichungstag und Bekanntmachung des Hinweises auf die Patenterteilung: **15.06.2016**
(21) Anmeldenummer: 15151727.3
(22) Anmeldetag: 20.01.2015
(51) Int. Cl.: C04B 28/06

(54) **Mineralische Formulierung enthaltend Sulfat-Aluminat-Zement und geschlossenporigen expandierten Perlit**
Mineral formulation comprising sulfate aluminate cement and closed-pored perlite
Formule minérale comprenant du ciment de sulfate-aluminate et une perlite avec des pores fermées

(30) Priorität: 03.02.2014 AT 500792014
(43) Veröffentlichungstag der Anmeldung: 05.08.2015
(73) Patentinhaber: Geolyth Mineral Technologie GmbH, 4050 Traun (AT)
(72) Erfinder: Enzenhofer, Karl, 3352 St. Peter (AT)
(74) Vertreter: Burgstaller, Peter

(56) Entgegenhaltungen:
- AT-B1- 509 576
- DE-A1- 10 313 186
- DE-A1-102010 048 174
- DATABASE WPI Week 201326 Thomson Scientific, London, GB; AN 2013-F39590 XP002740771, & CN 102 850 022 A (SUZHOU DE LYLE BUILDING MATERIALS TECHNO) 2. Januar 2013 (2013-01-02) & CN 102 850 022 A (SUZHOU DELAIER BUILDING MATERIALS SCIENCE AND TECHNOLOGY CO LTD) 2. Januar 2013 (2013-01-02)
- DATABASE WPI Week 200829 Thomson Scientific, London, GB; AN 2008-E01252 XP002740772, & CN 1 978 373 A (LANZHOU BUILDING MATERIAL RES DESIGNING INST) 13. Juni 2007 (2007-06-13) & CN 1 978 373 A (GANSU PROV BUILDING MATERIAL R [CN]) 13. Juni 2007 (2007-06-13)

## Beschreibung

Die Erfindung betrifft eine mineralische Formulierung umfassend einen mineralischen Binder und geschlossenzelligen expandierten Perlit, zur Verwendung als feuerfester mineralischer Baustoff, insbesondere zur Herstellung feuerfester mineralischer Wärmedämmelemente mit baustellentauglicher Festigkeit in allen geometrischen Formen wie beispielsweise Wärmedämmplatten.

Eine mineralische Wärmedämmplatte besteht aus einem Poren aufweisenden mineralischen Binder wie Zement oder Gips. Diese Poren können durch Lufteinschlüsse in der Matrix des abgebundenen mineralischen Binders gebildet sein, indem der flüssigen Formulierung eine Schaumkomponente zugesetzt wird. Eine zweite Möglichkeit besteht darin, der Formulierung ein poröses Schüttgut zuzusetzen wie Blähton, Blähglas, Blähschiefer, Bims oder Perlit.

Besonders der Einsatz von expandiertem Perlit ist in diesem Fall vorteilhaft, da dieser eine geringe Trockenrohdichte (Schüttgewicht ca. 70 kg/m²) aufweist.

Problematisch ist jedoch die hohe Saugfähigkeit von expandiertem Perlit, wodurch der expandierte Perlit Wasser aus der feuchten Bindemittelmischung aufsaugt. Daraus resultiert eine hohe Restfeuchte in der Wärmedämmplatte. Diese Restfeuchte kann nur über Trocknungsanlagen in kurzen Zeiträumen auf einen gewünscht niedrigen Wert gesenkt werden.

In der DE 10 2006 005 899 A1 wird vorgeschlagen dieses Problem dadurch zu beheben, dass die expandierten Perlitkörner mit einem Hydrophobierungsmittel beschichtet werden, bevor diese der Formulierung zugesetzt werden. Dadurch ist zwar das Problem mit der Restfeuchte grundsätzlich behebbar, nachteilig ist jedoch, dass die Perlitkörner aufgrund der Hydrophobierung nicht bzw. nur ungenügend in der sie umgebenden Matrix des abgebundenen mineralischen Binders gebunden sind. Die hydrophobierten Perlitkörner sind also zwar von der Matrix umschlossen, weisen aber keine Bindungen zum erhärteten mineralischen Bindemittel auf. Daraus ergibt sich eine negative Beeinflussung der Stabilität der Bauplatte, welche zu einem höheren Gewicht der Bauplatte (niedriger Perlit Anteil) führt.

Die AT 504 051 B1 beschreibt ein Verfahren für die Herstellung eines Schüttgutes durch Aufblähen durch Hitzeeinwirkung von Körnern eines Kristallwasser enthaltenden Minerals. Typischerweise ist dieses Mineral Vulkanglas, insbesondere Perlit oder Pechstein. Das Aufschäumen erfolgt indem die mineralischen Körner in das obere Ende eines Schachtofens eingegeben werden und in diesem nach unten fallen, wobei sie sich erhitzen und aufblähen. Am unteren Ende werden die Körner an einer trichterförmigen Auffangwand und in einem kühlen, auch dem Transport dienenden Luftstrom gekühlt und verfestigt. Es entstehen Kugeln mit glasierter, geschlossener Oberfläche. Dieser geschlossenporige expandierte Perlit zeichnet sich dadurch aus, dass er eine geschlossene, gesinterte Oberfläche aufweist, wodurch die Wasseraufnahme deutlich reduziert wird, ohne ein Hydrophobierungsmittel aufzubringen.

Es wird bereits vorgeschlagen geschlossenporigen expandierten Perlit als Isoliermedium in Calciumsilikatplatten und in Leichtbeton einzusetzen.

Die CN101585687 (A) zeigt ein wärmedämmendes feuerfestes Material, welches sich zusammensetzt aus 80 Gew.% der Komponente A und 20 Gew.% der Komponente B wobei sich Komponente A zusammensetzt aus, 18 - 22 Gew.% Aluminat-Zemement, 2 - 5 Gew.% Gips, 0.1 bis 0.3 Gew.% Magnesium-Hydroxide, 1 - 3 Gew.% Glasfasern, 1.5 bis 2.2 Gew.% redispergierbares Emulsion-Pulver und 70 bis 75 Gew.% Wasser; und Komponente B ist geschlossenzelliger Perlit mit einer Dichte von 67 bis 70 kg/m³.

Die CN102850022 (Database WPI; Week 201326; Thomson Scientific, London, GB; AN 2013-F39590 XP002740771 & CN 102850022 A) zeigt Wärmeisolationsmaterial, auf Zementbasis. Das auf Zement basierende Wärmedämmmaterial umfasst, bezogen aufs Gewicht, 20 bis 30 Teile Portlandzement, 3 bis 7 Teile Polystyrol-Teilchen, 5 bis 15 Teile Flugasche, 1 Teil Polyaluminiumchlorid, 3 bis 5 Teile Siliciumdioxid-Pulver, 20 bis 30 Teile feuerfesten Aluminat-Zement, 5 bis 15 Teile Polyacrylnitril-basierte Kohlenstofffasern, 5 bis 15 Gewichtsteile von Kohlenstofffasern, 1 bis 2 Teile Titandioxid, 1 bis 2 Teile Natriumfluorsilikat, 3 bis 5 Teile geschlossenzelliger expandierter Perlit, 5 bis 10 Teile Latex-Dispersionspulver, 1 Teil Celluloseether, 1 Teil eines Wasserdruckminderers, 1 bis 5 Teile kalziniertes, entschwefeltes Gipspulver, 1 bis 5 Teile Quarzpulver, 3 bis 5 Gewichtsteile graues Calcium, 3 bis 5 Gewichtsteile schweres Calciumcarbonat, 3 bis 5 Teile Aluminiumsilikatfasern, 1 bis 2 Teile Ölschieferteilchen und 1 bis 2 Teile Bentonit.

Aus der WO 2011044604 A1, der WO 2011044605 A1, der AT 509576 B1, sind mineralische Schäume bekannt, welche wärmedämmende Eigenschaften und geringe Dichte aufweisen. Diese mineralischen Schäume besitzen einen hohen Sulfat-Aluminat-Zement Anteil, wodurch ein rasches Abbinden ohne Autoklavierung erreicht werden kann, wodurch die Herstellung vereinfacht und Kosten gesenkt werden können. Durch die Verwendung des in diesen Schriften hydraulisch abbindenden Bindemittels wird zudem der Vorteil erreicht, dass der Mineralschaum während des Erhärtens nicht bzw. nicht wesentlich schwindet. Durch die Luftporen wird zwar eine ausgezeichnete Wärmeisolierung geschaffen, jedoch haben aus diesen Schäumen hergestellte Platten den Nachteil, dass ihre Oberfläche nicht besonders widerstandsfähig gegenüber mechanischen Belastungen ist.

Die der Erfindung zu Grunde liegende Aufgabe besteht darin, eine verbesserte Formulierung zur Bildung einer baustellentauglichen, feuerfesten und diffusionsoffenen mineralischen Wärmedämmplatte bereit zu stellen, welche bei normalen Umgebungsbedingungen rasch aushärtet, eine geringe Dichte und einen guten Wärmedämmwert aufweist und die ausreichend stabil ist um feine Strukturen ausbilden zu können, bzw. um auch an der Gebäudeaußenseite eingesetzt werden zu können.

Für das Lösen der Aufgabe wird vorgeschlagen eine Formulierung bereitzustellen, umfassend einen Anteil an schnell aushärtendem mineralischen Binder auf Basis eines Sulfat-Aluminat-Zements und einen Anteil an geschlossenporigem expandiertem Perlit, wobei der mineralische Binder in einem Anteil ausgewählt aus einem Bereich von 10 Gewichtsteilen und 70 Gewichtsteilen in der Formulierung enthalten ist, der Sulfat-Aluminat-Zement im mineralischen Binder in einem Anteil ausgewählt aus einem Bereich von 55 Gewichtsteilen bis 85 Gewichtsteilen enthalten ist, und der expandierte Perlit geschlossenzellig ist und in der Formulierung in einem Anteil ausgewählt aus einem Bereich von 20 Gewichtsteilen bis 75 Gewichtsteilen enthalten ist.

Besonders vorteilhaft an dem erfindungsgemäß verwendeten geschlossenzelligen expandierten Perlit ist, dass dieser im Unterschied zu herkömmlichen expandierten Perlit nicht mit Luft gefüllt ist, sondern dass im Hohlraum des erfindungsgemäß verwendeten geschlossenzelligen expandierten Perlit nahezu ein Vakuum besteht. Der geschlossenzellige expandierte Perlit liegt also in Form von annähernd sphärischen Hohlkörpern vor, welche im Inneren ein Vakuum aufweisen.

Bevorzugt weist der geschlossenzellige, expandierte Perlit eine mittlere Partikelgröße von 0,01 - 1,0 mm auf.

Bevorzugt beträgt der Anteil an geschlossenporigem, expandiertem Perlit zwischen 30 und 75 Gew.% der Formulierung.

Bevorzugt enthält das als Schüttgut vorliegende expandierte Perlit keine Partikel mit einer Größe von unter 10µm, dies ist vorteilhaft, da bei Herstellung und Verarbeitung kein lungengängiger bzw. inhalierbarer Feinstaub freigesetzt wird.

Bevorzugt sind der Formulierung keine faserigen Zusatzstoffe (Z.B. Stahl-, Glas-, Mineral- oder Kunststofffasern) zugesetzt, dies ist vorteilhaft, da bei Herstellung und Verarbeitung kein lungengängiger bzw. inhalierbarer Faserstaub freigesetzt wird.

Bevorzug besteht der mineralische Binder aus hydraulisch abbindendem Bindemittel sowie einem Sulfat, wobei das hydraulisch abbindende Bindemittel durch einen Sulfat-Aluminat-Zement gebildet ist, umfassend eine Sulfatkomponente und eine Aluminiumkomponente, und in einem Anteil von zumindest 50 Gewichtsteilen enthalten ist.

Bevorzug besteht der mineralische Binder aus einem Calzium-Sulfat-Aluminat-Zement (CAS, Sulfo-Aluminat-Zement, 4CaO.3Al2O3.SO3), einer Sulfatkomponente, einem Aluminiumsilikat sowie einer Calciumoxid bereitstellende Komponente. Der Sulfat-Aluminat-Zement ist dabei in einem Anteil ausgewählt aus einem Bereich von 55 Gewichtsteilen bis 85 Gewichtsteilen in der Formulierung enthalten. Vorzugsweise ist der Anteil des Sulfat-Aluminat-Zements mindestens 60 Gewichtsteile, insbesondere mindestens 70 Gewichtsteile. Die Sulfatkomponente, d.h. der Sulfatträger, ist in einem Anteil in der Formulierung enthalten, dass ein freier Sulfatanteil der Formulierung zwischen 5 Gewichtsteilen und 15 Gewichtsteilen, insbesondere zwischen 7 Gewichtsteilen und 12 Gewichtsteilen, beträgt. Das Alumniumsilikat ist in einem Anteil in der Formulierung enthalten, dass der freie Al203 -Anteil zwischen 3 Gewichtsteilen und 30 Gewichtsteilen, insbesondere zwischen 4 Gewichtsteilen und 20 Gewichtsteilen, beträgt. Die Calciumoxid bereitstellende Komponente, d.h. der Calziumoxidträger ist in einem Anteil enthalten, dass der CaO-Anteil zwischen 0,5 Gewichtsteilen und 2 Gewichtsteilen beträgt, insbesondere zwischen 0,7 Gewichtsteilen und 1,2 Gewichtsteilen, beträgt.

Bevorzugt ist der mineralische Binder gemäß einer der in der WO 2011044604 A1, der WO 2011044605 A1 oder der AT 509576 B1 gezeigten Formulierungen gebildet. Unter diesen Formulierungen sind die festen Bestandteile der Formulierung zur Herstellung des Mineralschaums, also exklusive Wasser und Schaumkomponente bzw. Schaumbildner, zu verstehen. Als Binder kann insbesondere die mineralische Trockenmischung des Wärmedämmstoffs GEOLYTH, der GEOLYTH Mineral Technologie GmbH, verwendet werden.

Bevorzugt wird der Formulierung ein Wasseranteil von 1 bis 75% zur Bildung eines fließfähigen, selbstaushärtenden Slurrys zugesetzt.

Bevorzugt wird der selbstaushärtende fließfähige Slurry in eine Form gegossen um in dieser zu einem Wärmedämmelement insbesondere zu einer Wärmedämmplatte auszuhärten.

Besonders bevorzugt, wird der selbstaushärtende fließfähige Slurry durch einen Deckel in die Form gepresst, wobei der selbstaushärtende fließfähige Slurry bei einem Druck von 10 bis 500 bar stabilisiert wird und aushärtet, um eine Wärmedämmplatte mit verdichteter mineralischen Matrix herzustellen. Der Slurry wird dabei vorzugsweise in einem Bereich von 5 bis 80 % seines ursprünglichen Volumens verdichtet.

Bevorzugt weist die Form eine komplexe Form und/oder eine detailreiche Oberfläche auf, zur Herstellung von stuckähnlichen, wärmedämmenden Elementen zur Fassadenverzierung oder als Dekorelement im Innenbereich.

Bevorzugt weist das erfindungsgemäß hergestellte Wärmedämmelement eine Dichte von 90 - 600 kg/m³, besonders bevorzugt von unter 350 kg/m³, auf.

Bevorzugt weist das erfindungsgemäß hergestellte Wärmedämmelement ein E-Modul von größer 3000 kPa auf.

Bevorzugt weist das erfindungsgemäß hergestellte Wärmedämmelement eine Druckfestigkeit von 0,2 bis 1,5 N/mm² in Anlehnung an die EN 826 auf, bzw. eine Druckspannung von größer 200 kPa bei 10% Stauchung.

Bevorzugt weist das erfindungsgemäße Wärmedämmelement einen Wärmeleitfähigkeit λ_{(10,tr)} (Lambda tr₁₀) von 0,040 bis 0,08 W/mK auf.

Bevorzugt weist das erfindungsgemäße Wärmedämmelement ein Schalldämmmaß RW (C; CTR) von 52 (-2;-6) dBA auf.

Bevorzugt weist das erfindungsgemäße Wärmedämmelement eine Wasserdampfdiffusionswiderstandszahl von µ < 2 auf.

Bevorzugt wird das erfindungsgemäß hergestellte Wärmedämmelement zumindest einseitig mit einer hydrophobierenden Beschichtung versehen. Bei Anbringung einer einseitig beschichteten Wärmedämmplatte an einer Oberfläche, wie insbesondere einer Hauswand ist, die beschichtete Seite von der Oberfläche abgewandt anzubringen. Ein erfindungsgemäßes Wärmedämmelement mit einer hydrophobierenden Beschichtung kann sowohl an der Objekt- bzw. Gebäudeinnenseite, in Hohlräumen als auch insbesondere an der Objekt- bzw. Gebäudeaußenseite angebracht sein.

Die erfindungsgemäße Formulierung ist gegenüber dem Stand der Technik vorteilhaft, aufgrund der Tatsache, dass alle verwendeten Komponenten rein mineralischen, biologischen Grundmaterialien entstammen.

Insbesondere ergeben sich folgende Vorteile bei Verwendung als Bau- bzw. Dämmmaterial:
- umweltbewusstes und energieeffizientes Bauen;
- Verwendung unbedenklicher Materialien;
- optimale gesamte Energiebilanz für Herstellung und Verarbeitung, da keine Verwendung von Autoklaven oder sonstigen energieaufwendigen Prozessen erfolgt;
- keine Freisetzung von toxischen Substanzen bei Verarbeitung oder Abbrand;
- rein mineralische Substanzen;
- unbedenkliche Entsorgung
- gut schallabsorbierend
- nicht brennbar - Brandschutzklasse A1 nach DIN EN 13501-1.

Aufgrund des hohen Anteils an Sulfat-Aluminat-Zement ergeben sich gegenüber dem Stand der Technik die Vorteile, dass keine zusätzlicher Energieaufwand für die Aushärtung der Endprodukte notwendig ist und dass aufgrund der hohen erzielten Stabilität und des geringen Schwundes keine der Verstärkung dienenden Fasern, wie Glasfasern oder Kunststofffasern, zugesetzt werden müssen.

Vorteilhaft sind zudem der hohe Wärmedämmwert und die erstklassigen Brandschutzeigenschaften aufgrund der Beständigkeit bis über bis 1000° Celsius. Zudem ist ein Einfärben mit Mineralfarben, das Vorsehen von verschiedene Oberflächenveredelungen und das Beimengung verschiedenster Substanzen möglich.

Die erfindungsgemäße Wärmedämmplatte ist gegenüber dem Stand der Technik vorteilhaft, da die Gesamtheit der zu bewertenden bautechnischen Kennwerte zu einem nachhaltigen Produkt führen, welches sich in der Herstellung durch den geringeren Gesamtenergieverbrauch gegenüber erdölbasierenden Produkten auszeichnet, wobei das Produkt leicht zu verarbeiten ist, ein marktkonforme Produktdichte hat und welches als unbedenkliche Baurestmasse entsorgt werden kann.

Erfindungsgemäße Wärmedämmelemente eignen sich zur Dämmung von sowohl Hitze als auch von Kälte.

Aufgrund der zahlreichen Vorteile der erfindungsgemäßen Formulierung bzw. der positiven Eigenschaften der daraus hergestellten Erzeugnisse ergeben sich zahlreiche vorteilhafte erfindungsgemäße Anwendungsfälle. Erfindungsgemäß findet die Formulierung zur Wärmedämmung, zur Unterestrich-Dämmung, zum Brand- und/oder Schallschutz Verwendung.

Die Verwendung zur Unterestrich-Dämmung ist insbesondere vorteilhaft, da der erfindungsgemäße Baustoff neben der guten Wärmedämmung auch Schall sehr gut absorbiert, rasch selbstständig aushärtet, form- und dimensionsstabil ist und gute Druckfestigkeit aufweist.

Eine weitere besonders vorteilhafte Anwendung ist die Rohrdämmung, da beliebige (z.B. rohrförmige) Formen einfach gegossen werden können, oder durch die einfache und sicheren Bearbeitung (durch Sägen, Bohren etc.) eine Anpassung an die örtlichen Gegebenheiten schnell erreichbar ist.

Neben der Verwendung zur Herstellung von Wärmedämmelementen eignet sich die erfindungsgemäße Formulierung auch zum Ausfüllen von Zwischenräumen, beispielsweise als Füllmaterial in den Wänden von Thermobehältnissen wie Kühlcontainern oder Kühl- bzw. Wärmeboxen. Durch das geringe Gewicht wird so auch für transportable Thermobehältnisse eine umweltfreundliche, ökologische Alternative zu erdölbasierten Isolierstoffen wir Styropor geschaffen.

## Patentansprüche

1. Formulierung zur Herstellung eines brandhemmenden mineralischen Dämmstoffs umfassend einen mineralischen Binder auf Basis eines Sulfat-Aluminat-Zements und ein poröses Schüttgut in Form von expandiertem Perlit, **dadurch gekennzeichnet,**
- **dass** der mineralische Binder in einem Anteil ausgewählt aus einem Bereich von 10 Gewichtsteilen bis 70 Gewichtsteilen in der Formulierung enthalten ist,
- **dass** der Sulfat-Aluminat-Zement im mineralischen Binder in einem Anteil ausgewählt aus einem Bereich von 55 Gewichtsteilen bis 85 Gewichtsteilen enthalten ist,
- **dass** das expandierte Perlit geschlossenzellig ist, wobei im Inneren der annähernd sphärischen Hohlkörper der geschlossenzelligen expandierten Perlitpartikel ein Vakuum vorliegt
- und **dass** das geschlossenzellige expandierte Perlit in der Formulierung in einem Anteil ausgewählt aus einem Bereich von 20 Gewichtsteilen bis 75 Gewichtsteilen enthalten ist.

2. Formulierung nach Anspruch 1, **dadurch gekennzeichnet, dass** der mineralische Binder gebildet ist aus Sulfat-Aluminat-Zement, zumindest einer Sulfatkomponente, zumindest einem Aluminiumsilikat sowie zumindest einer Calciumoxid bereitstellenden Komponente, wobei der Sulfat-Aluminat-Zement in einem Anteil ausgewählt aus einem Bereich von 55 Gewichtsteilen und 85 Gewichtsteilen enthalten ist, die Sulfatkomponente in einem Anteil enthalten ist, dass der Sulfatanteil zwischen 5 Gewichtsteilen und 15 Gewichtsteilen beträgt, das Alumniumsilikat in einem Anteil enthalten ist, dass der Al2O3-Anteil zwischen 3 Gewichtsteilen und 30 Gewichtsteilen beträgt, und die Calciumoxid bereitstellende Komponente in einem Anteil enthalten ist, dass der CaO-Anteil zwischen 0,5 Gewichtsteilen und 2 Gewichtsteilen beträgt.

3. Formulierung nach einem der Ansprüche 1 und 2, **dadurch gekennzeichnet, dass** der geschlossenporige, expandierte Perlit eine mittlere Partikelgröße von 0,01 - 1,0 mm aufweist.

4. Verwendung der Formulierung gemäß eines der Ansprüche 1 bis 3 zur Herstellung eines fließfähigen, selbstaushärtenden Slurrys, **dadurch gekennzeichnet, dass** der Formulierung Wasser zugegeben wird.

5. Verwendung des fließfähigen, selbstaushärtenden Slurrys gemäß Anspruch 4 zur Herstellung eines feuerfesten Wärmedämmelements, **dadurch gekennzeichnet, dass** dieses in eine Form gegossen wird und in dieser aushärtet.

6. Verwendung des fließfähigen, selbstaushärtenden Slurrys gemäß den Ansprüchen 4 bis 5 zur Herstellung eines feuerfesten Wärmedämmelements, **dadurch gekennzeichnet, dass** dieser während des Aushärtens in der Form in einem Bereich von 5 bis 80 % seines ursprünglichen Volumens verdichtet wird.

7. Verwendung einer Formulierung gemäß einem der Ansprüche 1 bis 4, **dadurch gekennzeichnet, dass** sie als wärmedämmendes und feuerfestes Füllmaterial insbesondere für Hohl- oder Zwischenräume verwendet wird.

8. Feuerfestes Wärmedämmelement hergestellt gemäß den Ansprüchen 5 und 6 mit einer Formulierung gemäß den Ansprüchen 1 bis 3, **dadurch gekennzeichnet, dass** es eine Dichte von 90 bis 600 kg/m³ aufweist.

9. Feuerfestes Wärmedämmelement nach Anspruch 8, **dadurch gekennzeichnet, dass** es ein Emodul von größer 3000 kPa aufweist.

10. Feuerfestes Wärmedämmelement nach einem der Ansprüche 8 und 9, **dadurch gekennzeichnet, dass** es eine Druckfestigkeit von 0,2 bis 1,5 N/mm² in Anlehnung an die DIN EN 826 aufweist.

11. Feuerfestes Wärmedämmelement nach einem der Ansprüche 8 bis 10, **dadurch gekennzeichnet, dass** es eine Wärmeleitfähigkeit Lambda tr₁₀ von 0,040 bis 0,08 W/mK aufweist.

12. Feuerfestes Wärmedämmelement nach einem der Ansprüche 8 bis 11, **dadurch gekennzeichnet, dass** es einseitig mit einem Hydrophobierungsmittel beschichtet ist.

13. Feuerfestes Wärmedämmelement nach einem der Ansprüche 8 bis 12, **dadurch gekennzeichnet, dass** es eine Wärmedämmplatte ist.

14. Feuerfestes Wärmedämmelement nach einem der Ansprüche 8 bis 12, **dadurch gekennzeichnet, dass** es eine Unterestrich-Dämmung ist.

15. Feuerfestes Wärmedämmelement nach einem der Ansprüche 8 bis 12, **dadurch gekennzeichnet, dass** es eine Rohrdämmung ist.

## Claims

1. Formulation for producing a fire-retarding mineral insulating material comprising a mineral binding agent based on a sulphate aluminate cement and a porous bulk material in the form of expanded perlite, **characterised in that**
- the mineral binding agent is contained in the formulation in a proportion selected from a range of 10 to 70 parts by weight,
- the sulphate aluminate cement is contained in the mineral binding agent in a proportion selected from a range of 55 to 85 parts by weight,
- the expanded perlite is of a closed-cell type such that there is a vacuum inside the approximately spherical cavities of the closed-cell expanded perlite particles
- and that the closed-cell expanded perlite is contained in the formulation in a proportion selected from a range of 20 to 75 parts by weight.

2. Formulation according to claim 1, **characterised in that** the mineral binding agent is formed from sulphate aluminate cement, at least one sulphate component, at least one aluminium silicate and at least one calcium-oxide providing component such that the sulphate aluminate cement is contained in a proportion selected from a range of 55 to 85 parts by weight, the sulphate component is contained in a proportion such that the sulphate content is between 5 and 15 parts by weight, the aluminium silicate is contained in a proportion such that the AL2O3 content is between 3 and 30 parts by weight and the calcium-oxide providing component is contained in a proportion such that the CaO content is between 0.5 and 2 parts by weight.

3. Formulation according to one of claims 1 and 2, **characterised in that** the closed-pore expanded perlite has an average particle size of 0.01 - 1.0 mm.

4. Use of the formulation according to one of claims 1 to 3 for the production of a fluid, self-setting slurry, **characterised in that** water is added to the formulation.

5. Use of the fluid, self-setting slurry according to claim 4 for the production of a fire-resistant thermal insulation element, **characterised in that** it is cast in a mould and sets in the mould.

6. Use of the fluid, self-setting slurry according to claims 4 and 5 for production of a fire-resistant thermal insulation element, **characterised in that** it is compressed to between 5 and 80% of its original volume while setting in the mould.

7. Use of a formulation according to one of claims 1 to 4, **characterised in that** it is used in particular as a thermal insulation and fire-resistant filling material for cavities or gaps.

8. Fire-resistant thermal insulation element manufactured according to claims 5 and 6 using a formulation according to Claims 1 to 3, **characterised in that** it has a density of between 90 and 600 kg/m³.

9. Fire-resistant thermal insulation element according to claim 8, **characterised in that** it has a modulus of elasticity greater than 3000 kPa.

10. Fire-resistant thermal insulation element according to one of claims 8 and 9, **characterised in that** it has a compressive strength of between 0.2 and 1.5 N/mm² according to DIN EN 826.

11. Fire-resistant thermal insulation element according to one of claims 8 to 10, **characterised in that** it has a lambda tr₁₀ thermal conductivity of between 0.040 and 0.08 W/mK.

12. Fire-resistant thermal insulation element according to one of claims 8 to 11, **characterised in that** it is treated on one side with a hydrophobic coating.

13. Fire-resistant thermal insulation element according to one of claims 8 to 12, **characterised in that** it is a thermal insulation board.

14. Fire-resistant thermal insulation element according to one of claims 8 to 12, **characterised in that** it is a sub-screed insulator.

15. Fire-resistant thermal insulation element according to one of claims 8 to 12, **characterised in that** it is a pipe insulator.

## Revendications

1. La formulation pour la production d'un matériau minéral isolant et ignifuge constitué d'un liant minéral à base de ciment sulfo-alumineux et d'un matériau poreux en vrac composé de perlite expansée, est **caractérisée en ce que** :
- le liant minéral est présent dans la formulation en proportion comprise entre 10 et 70 parties en poids,
- le ciment sulfo-alumineux est présent dans le liant minéral en proportion comprise entre 55 et 85 parties en poids,
- la perlite expansée présente des cellules fermées afin d'assurer la présence d'un vide à l'intérieur du corps creux et approximativement sphérique des particules de perlite expansée à cellules fermées
- et la perlite expansée à cellules fermées est présente dans la formulation en proportion comprise entre 20 et 75 parties en poids.

2. La formulation se rapportant à la revendication 1 est **caractérisée en ce que** le liant minéral est composé de ciment sulfo-alumineux et, au minimum, d'un composant sulfaté ainsi que d'un silicate d'aluminium et d'un composant à base d'oxyde de calcium, cette composition étant constituée de ciment sulfo-alumineux en proportion comprise entre 55 et 85 parties en poids, de composant de sulfate en proportion comprise entre 5 et 15 parties en poids, de silicate d'aluminium en proportion telle que la proportion en Al2O3 soit comprise entre 3 et 30 parties en poids, et de composant à base d'oxyde de calcium en proportion telle que la proportion en CaO soit comprise entre 0,5 et 2 parties en poids.

3. La formulation se rapportant aux revendications 1 et 2 est **caractérisée en ce que** les particules de perlite expansée à pores fermés présentent une granulométrie moyenne comprise entre 0,01 et 1,0 mm.

4. L'utilisation de la formulation conformément aux revendications 1 à 3 pour la fabrication d'une suspension liquéfiable et autodurcissante est **caractérisée en ce que** de l'eau est ajoutée à la formulation.

5. L'utilisation de la suspension liquéfiable et autodurcissante conformément à la revendication 4 pour la fabrication d'un élément d'isolation thermique pare-feu est **caractérisée en ce que** la suspension est versée dans un moule, dans lequel elle est laissée à durcir.

6. L'utilisation de la suspension liquéfiable et autodurcissante conformément aux revendications 4 et 5 pour la fabrication d'un élément d'isolation thermique pare-feu est **caractérisée en ce que** pendant le durcissement dans le moule, la suspension est compressée pour atteindre un volume compris entre 5 et 80 % de son volume d'origine.

7. L'utilisation de la formulation conformément aux revendications 1 à 4 est **caractérisée en ce que** le matériau est utilisé en tant que matériau de remplissage isolant et pare-feu pour les cavités ou interstices.

8. L'élément d'isolation thermique fabriqué conformément aux revendications 5 et 6 à l'aide d'une formulation fabriquée conformément aux revendications 1 à 3 est **caractérisé en ce qu'**il présente une masse volumique comprise entre 90 et 600 kg/m³.

9. L'élément pare-feu obtenu conformément à la revendication 8 est **caractérisé en ce qu'**il présente un module E supérieur à 3000 kPa.

10. L'élément pare-feu obtenu conformément aux revendications 8 et 9 est **caractérisé en ce qu'**il présente une résistance à la pression comprise entre 0,2 et 1,5 N/mm², conformément à la norme DIN EN 826.

11. L'élément pare-feu obtenu conformément aux revendications 8 à 10 est **caractérisé en ce qu'**il présente une conductivité thermique Lambda tr₁₀ comprise entre 0,040 et 0,08 W/mK.

12. L'élément pare-feu obtenu conformément aux revendications 8 à 11 est **caractérisé en ce qu'**il est enduit d'un revêtement hydrophobe sur un côté.

13. L'élément pare-feu obtenu conformément aux revendications 8 à 12 est **caractérisé en ce qu'**il présente la forme d'un panneau d'isolation thermique.

14. L'élément pare-feu obtenu conformément aux revendications 8 à 12 est **caractérisé en ce qu'**il s'agit d'un élément d'isolation thermique sous chape.

15. L'élément pare-feu obtenu conformément aux revendications 8 à 12 est **caractérisé en ce qu'**il s'agit d'un élément d'isolation thermique pour tuyauterie.
